(19) Europäisches Patentamt
European Patent Office
Office européen des brevets

(11) Publication number: **0 107 636**
**B1**

(12) **EUROPEAN PATENT SPECIFICATION**

(45) Date of publication of patent specification: **30.12.86**

(51) Int. Cl.$^4$: **B 01 D 13/04,** B 01 D 53/22

(21) Application number: **83870091.2**

(22) Date of filing: **14.09.83**

(54) **Multicomponent membrane for gas separation.**

(30) Priority: **16.09.82 US 419284**

(43) Date of publication of application:
**02.05.84 Bulletin 84/18**

(45) Publication of the grant of the patent:
**30.12.86 Bulletin 86/52**

(84) Designated Contracting States:
**BE DE FR GB IT NL**

(56) References cited:
**DE-C-1 120 690**
**US-A-2 966 235**
**US-A-3 035 016**
**US-A-3 127 363**
**US-A-3 133 891**
**US-A-4 230 463**
**US-A-4 243 701**

(73) Proprietor: **Monsanto Company**
**Patent Department 800 North Lindbergh Boulevard**
**St. Louis Missouri 63167 (US)**

(72) Inventor: **Holladay, Harry Philip**
**5009 Oak Park Road**
**Raleigh North Carolina 27609 (US)**
Inventor: **Malon, Raymond Francis**
**9818 Ianbark Lane**
**Edmundson Missouri 63134 (US)**
Inventor: **Zampini, Anthony**
**1965 Beacon Grove Drive**
**St. Louis Missouri 63141 (US)**

(74) Representative: **McLean, Peter et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

BACKGROUND OF THE INVENTION

Field of the invention

This invention relates to multicomponent membranes for gas separations.

Prior Art

U.S. Patent 4,230,463 discloses a hollow fiber membrane which is coated with poly(siloxane) for use in separating gases such as hydrogen from other gases. One of the problems which we have found to exist with a multicomponent membrane of this type is that the effectiveness of the coating is destroyed or substantially reduced if the gas being treated contains certain contaminants. Examples of contaminants which are detrimental to a multicomponent gas separation membrane of this type are aliphatic hydrocarbons such as hexane; aromatics such as benzene and toluene; methanol; ammonia and hydrogen sulfide. Very small percentages of these contaminants in the feed gas stream are sufficient to have a seriously damaging effect on a membrane of this type.

Upon exposure to the contaminant the permeability of the coated membrane for a given gas will change significantly, thereby changing the separation factor and reducing the effectiveness of the fiber. Continued exposure of the membrane to the contaminant results in such a significant change in the separation factor that the membrane becomes ineffective for separating one gas from a mixture.

Most of the contaminants found in various feed gas streams can be removed prior to contact of the gas stream with the membrane, in order to avoid damage to the membrane. Unfortunately, this adds at least one more step to the process, thereby increasing the cost and complexity of the gas treatment process.

U.S. Patent 4,230,463 also discloses that the dimethylsiloxane coating utilized in the disclosed coated fiber membrane may be cross-linked by using a cross-linking agent such as alpha methyl styrene. No indication is given as to the desirability of using such a cross-linked coating and it does not have the advantages of the cross-linked coating of this invention, as pointed out below.

U.S.Patent 3,035,016 discloses a caulking compound made by reacting acyloxy silanes with hydroxylated siloxanes. It is said that these compositions give a surface cure within 30 minutes but remain soft for years and adhere to glass, porcelain and other materials.

U.S. Patent 3,133,891 discloses the reacting of a diorganopolysiloxane and an organotriacyloxysilane to form self-vulcanizing compositions which may be used for caulking, coating glass, etc.

U.S. Patent 3,127,363 discloses a process for making a vulcanized silicone elastomer by reacting a precondensed difunctional silicone with a cross-linking agent having reactive groups such as hydroxyl, alkoxy, aryloxy or amino groups. These elastomers are said to be useful as moulding compositions, as a material for filling teeth, as sealing and coating compositions and in the manufacture of laminates.

Summary of the invention

The membrane of the invention is a multicomponent membrane for gas separation wherein polymeric porous substrate membrane is coated with the condensation product of silanol terminated poly(dimethylsiloxane) and a cross-linking compound having the formula $R_1M\ Si\ (OR_2)_3$ where $R_1$ is

$-CH_3$, $-SH$, $-Cl$, $-CF_3$, $-NCO$

$-CN$, 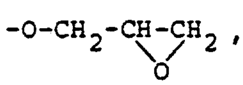 , 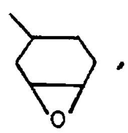 , $-NH_2$, $-NHCH_3$,

$-N(CH_3)_2$, -NH-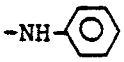 , $-NHCOOCH_2CH_3$, 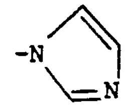

or $—N(CH_2CH_2OH)_2$, M is $—CH_2—$, $—CH_2CH_2—$ or $—CH_2CH_2CH_2—$, and $R_2$ is $—CH_3$, $—CH_2CH_3$, or

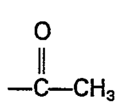

The process of the invention is one of separating gases from a mixture thereof by selective permeation through a multicomponent membrane of the invention.

Detailed description of the invention

The multicomponent membrane of this invention is useful in separating one gas from a mixture of gases. For example, the membrane is useful in separating oxygen from nitrogen and hydrogen from at least one of carbon monoxide, carbon dioxide, nitrogen, oxygen, argon, nitrous oxide and $C_1$—$C_5$ hydrocarbons, especially methane, ethane and ethylene. Various mixtures of these and other gases are

frequently found in various commercial processes. The separation of one gas from a mixture is effected by virtue of the fact that the membrane is more permeable to that one gas than other gasses of the mixture. In carrying ou the separation operation, the mixture of gases is brought into contact with one side of the membrane, at a suitable pressure differential across the membrane, and the more permeable, or "faster", gas permeates the membrane and is recovered from the other side thereof. When the membrane is in the form of a hollow fiber, one side is the outer surface of the fiber and the other side is the internal or bore surface of the fiber.

For a given cross-sectional area of a given membrane, the rate of recovery of the faster gas and the purity of the recovered gas is determined by the pressure differential maintained across the membrane and the ratio of the permeability of the faster gas with respect to the other gases of the mixture. The higher the permeability of the faster gas, with respect to the other gases of the mixture, the more effective will be the separation operation.

It is unfortunate that certain multicomponent membranes can lose substantially all of their ability to separate one gas from a mixture if the gas mixture contains certain contaminants. For example, the effectiveness of the polysulfone membrane disclosed in U.S. Patent 4,230,463 is substantially reduced if the gas stream contains even very small amounts of contaminants such as $C_3$—$C_8$ hydrocarbons aromatics such as benzene or toluene; methanol; ammonia; hydrogen sulfide; etc. In the past, problems caused by these contaminants have been avoided by removal of the contaminant prior to bringing the gas mixture into contact with the membrane. This has added an additional step to the process, with attendant increases in costs and complexity. Also, if the contaminant removal step fails for some reason, the membrane is damaged by the contaminant and must be replaced.

These problems are avoided by use of the multicomponent membrane of this invention, this membrane being substantially immune to damage by contact with contaminants such as those mentioned above.

The multicomponent membrane of this invention is made up of a polymeric porous substrate membrane and a coating in contact with the substrate, the substrate membrane preferably being in the form of a hollow fiber. The polymeric substrate is the type described in U.S. Patent 4,230,463 and is preferably formed from a polysulfone polymer.

The substrate membrane is preferably in the form of a hollow fiber having an outside diameter of about $2\times10^{-4}$m to $10^{-4}$m (200 to 1,000 microns) and a wall thickness of about $5\times10^{-5}$m to $3\times10^{-4}$m (50 to 300 microns). The polsulfone substrate membrane is porous, the average pore cross-sectional diameter varying within the range of $5\times10^{-10}$m to $2\times10^{-6}$m (5 to 20,000 Angstrom). The pore sizes are preferably greater in the interior of the membrane and lesser near the surfaces of the membrane, such that the membrane is anisotropic. The porosity of the substrate membrane is sufficient that the void volume of this membrane is within the range of 10 to 90, preferably about 30 to 70, percent based on the superficial volume, i.e., the volume contained within the gross dimensions of the porous separation membrane.

The coating in contact with the porous substrate membrane is the condensation product of silanol terminated poly(dimethylsiloxane) and a cross-linking compound as defined herein. The dimethylsiloxane has, prior to cross-linking, at least two terminal hydroxyl groups. The thickness of the coating will be in the range of $5\times10^{-7}$m to $5\times10^{-5}$m (5,000 Angstrom to 50 microns).

One advantage of using the cross-linking agents of this invention is that the condensation reaction which is used to cross-link the dimethylsiloxane is not inhibited in the presence of certain materials. The curing of the dimethylsiloxane of U.S. Patent 4,230,463 (without the cross-linking agents of this invention) is inhibited by the presence of very small amounts of certain materials such as sulfur or sulfur-containing chemical compounds, amines and certain other nitrogen-containing compounds, acetic materials such as organic acids and silicone rubber catalysts. For example, the reaction by-product of the peroxide catalyst in many heat-vulcanized silicone rubber stocks is an organic acid. This same inhibition will occur when dimethylsiloxane is cross-linked with an addition type cross-linker such as the alpha methyl styrene cross-linking agent disclosed in U.S. Patent 4,230,463. Failure of the dimethylsiloxane to cure will result in a defect in the coating of the hollow fiber membrane.

Another advantage of using the cross-linking agents of this invention is that the coating can be cured at room temperature and ambient conditions. When a vinyl type cross-linking agent is utilized, the catalyst required to carry out the cross-linking normally requires a curing temperature well above 100°C. For example, one catalyst useful in cross-linking vinyl type compounds is 2,4-dichlorobenzoyl peroxide which normally requires a temperature of 130° to 160°C for curing. The use of such temperatures would seriously damage or destroy the polysulfone substrate preferred in this invention. The polymeric substrate will begin to densify and lose its porosity above about 120°C, such that the permeation rate of the substrate will be substantially reduced. Even more substrate damage will occur at higher temperatures.

It has been found that especially beneficial results can be achieved by using a cross-linking compound having the formula $R_1M\ Si\ (OR_2)_3$ where $R_1$ is

$-CH_3$, $-SH$, $-Cl$, $-CF_3$, $-NCO$

$-CN$, 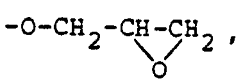 , 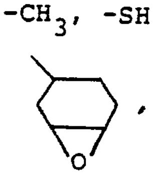 , $-NH_2$, $-NHCH_3$,

$-N(CH_3)_2$, 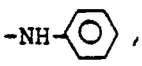, $-NHCOOCH_2CH_3$, 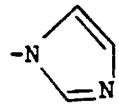

or $—N(CH_2CH_2OH)_2$, M is $—CH_2—$, $—CH_2CH_2—$ or $—CH_2CH_2CH_2—$, and $R_2$ is $—CH_3$, $—CH_2CH_3$ or

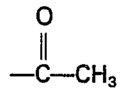

While adhesion of the coating to the substrate is not essential to the good performance of the coated fiber, it is preferred that the cross-linking agent also have the characteristic of good adhesion to the substrate. Such preferred cross-linking agents are aminopropyltrimethoxysilane, aminopropyltriethoxysilane, chloropropyltriethoxysilane, chloropropyltrimethoxysilane, mercaptopropyltrimethoxysilane, mercaptopropyltriethoxysilane, isocyanatopropyltriethoxysilane, and N-phenylaminopropyltrimethoxysilane.

It is essential that the proper cross-linking compound be used. Many cross-linking compounds of various types are known. However, most of these are not suitable for the purposes intended herein. The cross-linking compound selected must be such that the following requirements are met:

1. The cross-linked coating must be substantially more resistant to the attack of contaminants.
2. The cross-linked coating cannot be brittle.
3. The cross-linking of the coating cannot affect the permeation characteristics of the coating or the substrate membrane or the combination thereof.
4. The coating must be capable of filling pores in the surface of the substrate membrane.
5. The cross-linked coating must not penetrate too deeply into pores in the substrate membrane.
6. The cross-linked coating must not remain tacky after curing.
7. The coating must not cause the fibers to mat or adhere to each other when assembled in a bundle.
8. The coating formulation must be stable.

We have found that the above requirements are met by the cross-linking compounds employed in membranes according to the present invention.

The formulation for the coating to be applied to and cured on the membranes described herein may be made up of 100 parts of dimethylsiloxane diol having a molecular weight within the range of 10,000 to 200,000, 1 to 20, preferably 2 to 12, parts of the cross-linking compounds specified herein and 1 to 5 parts of a catalyst such as dibutyltin dilaurate.

More preferably, the coating formulation will contain 8—12 phr (parts per hundred parts of the dimethylsiloxane diol) of the cross-linking compound and about 1 phr of the catalyst. Other catalysts which can be used are tin octoate and dibutyltin diacetate.

In carrying out the coating operation, a bundle of hollow fiber substrate membranes are positioned within an enclosure and the enclosure is filled with the coating mixture. After the coating mixture has been in contact with the fibers in the bundle for a sufficient time to wet and cover these fibers, the bundle is withdrawn and the solvent is allowed to evaporate at ambient conditions to cure the coating and thereby effect cross-linking of the dimethylsiloxane diol. The coating self cures at ambient conditions.

## Examples 1—7

Polysulfone substrate membranes of the type defined herein, in the form of hollow fibers, were coated with silicones prepared from 100 parts of poly(dimethylsiloxane) diol having a molecular weight of 101,500, 10 parts of the cross-linking agents specified in the examples and 2 parts per hundred of dibutyltin dilaurate as a catalyst, the silicones being prepared in sufficient pentane to make a 1 percent solution. After curing the coating, the permeabilities of the membranes with respect to hydrogen [$(P/l)H_2$] and the separation factors ($_{\alpha}H_2$) of the membranes, as a ratio permeability of hydrogen to carbon monoxide, were determined in a conventional manner. The fibers were then exposed to contaminants by being immersed in a mixture of 7 percent toluene and 93 percent n-hexane, both commonly found contaminants which are known to severely damage coatings such as disclosed in U.S. Patent 4,230,463, and allowed to stand for 16 hours. The permeabilities and separation factors were again measured. The results are shown in Table I.

TABLE I

| Example | Cross-Linking Compound | Adhesion | Before Exposure $(P/l)H_2 \times 10^6$ | Before Exposure $\alpha \frac{H_2}{CO}$ | After Exposure $(P/l)H_2 \times 10^6$ | After Exposure $\alpha \frac{H_2}{CO}$ |
|---|---|---|---|---|---|---|
| 1 | None (control) | Poor | 73 | 40 | 75 | 18 |
| 2 | Aminopropyl-triethoxysilane | Excellent | 75 | 35 | 51 | 31 |
| 3 | Chloropropyl-trimethoxysilane | Excellent | 91 | 37 | 71 | 33 |
| 4 | Mercaptopropyl-trimethoxysilane | Good to Excellent | 71 | 44 | 64 | 31 |
| 5 | Isocyanotopropyl-triethoxysilane | Excellent | 77 | 39 | 55 | 34 |
| 6 | N-phenyaminopropyl-trimethoxysilane | Excellent | 70 | 35 | 52 | 34 |
| 7 | N-(trimethoxysilane-propylimidazole | Excellent | 78 | 41 | 65 | 31 |

It will be noted from Table I that the separation factor of the fibers of Examples 2—7 remained substantially unchanged after exposure to the toluene/hexane mixture, while the control membrane of Example 1, which was coated with the coating of U.S. Patent 4,230,463, showed a substantial reduction in the separation factor after exposure to the toluene/hexane mixture.

Adhesion was tested in all Examples by applying a 5 weight percent solution of the coating formulation in pentane, to a polysulfone substrate to form a coating on the film and allowing the coating to cure to tackless state. The coated substrate was then immersed in pentane for several minutes and then withdrawn. The coating was then rubbed lightly with a finger to determine how well the coating adhered to the substrate. Coatings having good adhesion could stand in the pentane overnight without any signs of blistering or failing to adhere to the substrate.

Examples 8—13

Polysulfone hollow fiber substrates as described herein were coated with a coating formulations made up of 100 parts of poly(dimethylsiloxane) diol and varying amounts of gamma aminopropyltriethoxysilane, the coating being applied by dipping the fibers in a bath of pentane containing one weight percent of the coating formulation. Two phr of bidutyltin dilaurate was used as a catalyst. The hydrogen permeability and separation factor of hydrogen with respect to carbon monoxide were then determined in a conventional manner. The coated fibers were then immersed for 16 hours in a 7/93 toluene-hexane mixture and again tested for hydrogen permeability and $H_2/CO$ separation factor. The results are shown in Table II.

TABLE II

| Example | Cross-Linking Compound phr | Before Exposure | | After Exposure | |
|---|---|---|---|---|---|
| | | $(P/l)H_2 \times 10^6$ | $\alpha \frac{H_2}{CO}$ | $(P/l)H_2 \times 10^6$ | $\alpha \frac{H_2}{CO}$ |
| 8 (control) | none | 231 | 4.3 | 63 | 20 |
| 9 | 2 | 76 | 38 | 54 | 38 |
| 10 | 4 | 70 | 41 | 56 | 33 |
| 11 | 6 | 74 | 38 | 60 | 36 |
| 12 | 8 | 74 | 38 | 56 | 31 |
| 13 | 10 | 78 | 38 | 55 | 35 |

Examples 14—25

Polysulfone substrate membranes of the type defined herein, in the form of hollow fibers, were coated with silicones prepared from 100 parts of poly(dimethylsiloxane) diol having a molecular weight of 101,500, 10 parts of the cross-linking agents specified in the examples and 2 parts per hundred of dibutyltin dilaurate as a catalyst, the silicones being prepared in sufficient pentane to make a 1 percent solution. After curing the coating, the permeabilities of the membranes with respect to hydrogen and the separation factors of the membranes, as a ratio of the permeability of hydrogen to carbon monoxide, were determined. The fibers were then immersed in a mixture of 7 percent toluene and 93 percent n-hexane, both commonly found contaminants which are known to severely damage coatings such as disclosed in U.S. Patent 4,230,463, and allowed to stand for 16 hours. The permeabilities and separation factors were again measured. The results are shown in Table III. The dashes adjacent to the silicon atom of each compound in Tables III, IV, V and VI indicate the reactive sites of each compound, methoxy or ethoxy groups being attached to these sites prior to the cross-linking reaction.

TABLE III

| Example | Cross-Linking Compound | Adhesion Behavior* | Before Exposure (P/l)$H_2$ × $10^6$ | Before Exposure $_{\alpha}$$H_2$/CO | After Exposure (P/l)$H_2$ × $10^6$ | After Exposure $_{\alpha}$$H_2$/CO |
|---|---|---|---|---|---|---|
| 14 | none (control) | P | 73 | 40 | 65 | 18 |
| 15 | $\equiv SiCH_2CH_3$ | P | 63 | 36 | 56 | 29 |
| 16 | $\equiv SiCH_2CH_2SH$ | GP | 85 | 38 | 70 | 33 |
| 17 | $\equiv SiCH_2CH_2CF_3$ | P | 87 | 35 | 64 | 34 |
| 18 | $\equiv SiCH_2CH_2CH_2CN$ | P | 80 | 31 | 63 | 33 |
| 19 | 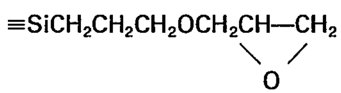 | GP | 76 | 35 | 66 | 33 |
| 20 | 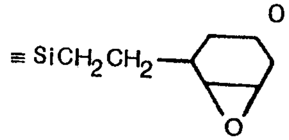 | GE | 77 | 37 | 67 | 31 |
| 21 | $\equiv CH_2CH_2CH_2NHCH_3$ | P | 45 | 47 | 30 | 47 |
| 22 | $\equiv SiCH_2CH_2CH_2N(CH_3)_2$ | P | 74 | 39 | 61 | 35 |
| 23 | $\equiv SiCH_2CH_2CH_2NHCOOCH_2CH_3$ | P | 66 | 38 | 54 | 34 |
| 24 | $\equiv SiCH_2CH_2CH_2NHCH_2CH_2NHCH_2CH_2COOCH_3$ | G | 87 | 38 | 70 | 32 |
| 25 | $\equiv SiCH_2CH_2CH_2N(CH_2CH_2OH)_2$ | — | 75 | 33 | 62 | 29 |

* P = Poor; G = Good; GP = Good to Poor; GE = Good to Excellent; E = Excellent.

The indicated silicone solutions were applied to the surface of polysulfone films, allowed to cure until tackless, then immersed in pentane. Adhesion of the silicone to polysulfone was evaluated after the composite films were exposed to the pentane.

It should be noted that the ability or inability of the coating to adhere to the substrate membrane had little or no effect on the resistance of the coating to damage by the hexane/toluene mixture. This indicates that, since no chemical bonding of the coating to the porous substrate membrane occurs, the substrate membrane may be made of some polymeric material other than polysulfone. Other polymeric materials suitable for making membrane for gas separations are known. However, the preferred polymer for making the substrate membrane is polysulfone. In those cases where adhesion was poor, the coating did not actually fall off the film but merely formed blisters.

## Examples 26—32

Example 26 was a control example, the fiber used having no coating at all. The cross-linking compound used in Examples 27—32 was aminopropyltrimethoxysilane, varying amounts of the compound being used in different examples. Tests were made as described in the above examples. Results are shown in Table IV.

TABLE IV

| | | | | Before Exposure | | After Exposure | |
|---|---|---|---|---|---|---|---|
| Example | Cross-Linking Compound | phr | Conc.(wt%) | $(P/l)H_2 \times 10^6$ | $\alpha\frac{H_2}{CO}$ | $(P/l)H_2 \times 10^6$ | $\alpha\frac{H_2}{CO}$ |
| 26 | none (control) | — | — | 231 | 43 | 63 | 20 |
| 27 | $\equiv SiCH_2CH_2CH_2NH_2$ | 2 | 1 | 76 | 38 | 54 | 38 |
| 28 | $\equiv SiCH_2CH_2CH_2NH_2$ | 4 | 1 | 70 | 41 | 56 | 33 |
| 29 | $\equiv SiCH_2CH_2CH_2NH_2$ | 6 | 1 | 74 | 38 | 60 | 36 |
| 30 | $\equiv SiCH_2CH_2CH_2NH_2$ | 8 | 1 | 74 | 38 | 56 | 31 |
| 31 | $\equiv SiCH_2CH_2CH_2NH_2$ | 10 | 1 | 78 | 38 | 55 | 35 |
| 32 | $\equiv SiCH_2CH_2CH_2NH_2$ | 10 | 0.1 | 90 | 37 | — | — |

## Example 33—39

Examples 27—32 were repeated, using trimethoxysilylpropylimadazole as the cross-linking compound instead of aminopropyltrimethoxysilane. Results are shown in Table V.

TABLE V

| | | | | Before Exposure | | After Exposure | |
|---|---|---|---|---|---|---|---|
| Example | Cross-Linking Compound | phr | Conc.(wt%) | $(P/l)H_2\times10^6$ | $\alpha\frac{H_2}{CO}$ | $(P/l)H_2\times10^6$ | $\alpha\frac{H_2}{CO}$ |
| 33 | 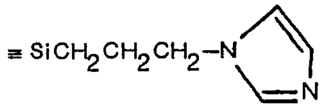 | 2 | 5 | 58 | 34 | 58 | 27 |
| 34 | 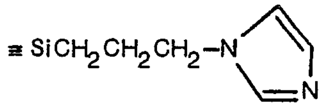 | 2 | 1 | 80 | 41 | 65 | 32 |
| 35 | 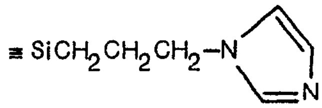 | 2 | 0.5 | 71 | 40 | 61 | 28 |
| 36 | 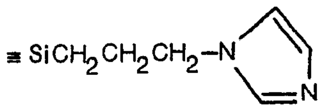 | 2 | 0.1 | 83 | 39 | 70 | 29 |
| 37 | 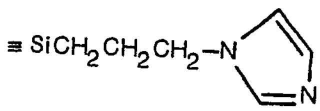 | 2 | 0.01 | 91 | 38 | 75 | 23 |
| 38 | 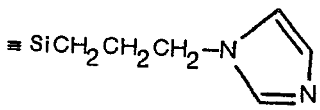 | 10 | 1.0 | 53 | 43 | 52 | 33 |
| 39 | 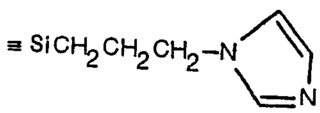 | 10 | 0.1 | 87 | 40 | — | — |

Examples 40—43

Examples 33—39 were repeated, using mercaptopropyltrimethoxysilane instead of aminopropyltrimethoxysilane. Results are shown in Table VI.

TABLE VI

| | | | | Before Exposure | | After Exposure | |
|---|---|---|---|---|---|---|---|
| Example | Cross-Linking Compound | phr | Conc.(wt%) | $(P/l)H_2\times10^6$ | $\alpha\frac{H_2}{CO}$ | $(P/l)H_2\times10^6$ | $\alpha\frac{H_2}{CO}$ |
| 40 | $\equiv SiCH_2CH_2CH_2SH$ | 2 | 1 | 90 | 37 | 73 | 35 |
| 41 | $\equiv SiCH_2CH_2CH_2SH$ | 2 | 0.5 | 78 | 40 | 79 | 26 |
| 42 | $\equiv SiCH_2CH_2CH_2SH$ | 2 | 0.5 | 69 | 40 | 59 | 24 |
| 43 | $\equiv SiCH_2CH_2CH_2SH$ | 2 | 0.05 | 88 | 28 | — | — |
| 44 | $\equiv SiCH_2CH_2CH_2SH$ | 2 | 0.01 | 80 | 28 | 66 | 23 |
| 45 | $\equiv SiCH_2CH_2CH_2SH$ | 10 | 1.0 | 71 | 44 | 64 | 31 |

Examples 46—51

A coating formulation was made from 100 parts of silanol terminated polydimethylsiloxane having a molecular weight of 101,500, 10 parts of aminopropyltrimethoxysilane and varying amounts of dibutyltindilaurate. These formulations were applied to substrates as described herein and then tested as described above. The results are shown in Table VII. Example 46 was a control, using no cross-linking agent.

TABLE VII

| | | Before Exposure | | After Exposure | |
|---|---|---|---|---|---|
| Example | phr Catalyst | $(P/l)H_2 \times 10^6$ | $\alpha\frac{H_2}{CO}$ | $(P/l)H_2 \times 10^6$ | $\alpha\frac{H_2}{CO}$ |
| 46 | Control | 73 | 40 | 65 | 18 |
| 47 | 0.0 | 65 | 33 | 51 | 26 |
| 48 | 0.2 | 83 | 35 | 65 | 30 |
| 49 | 1.0 | 70 | 35 | 54 | 32 |
| 50 | 2.0 | 75 | 35 | 51 | 31 |
| 51 | 4.0 | 63 | 36 | 49 | 37 |

Examples 52—53

A coating formulation was made from a mixture of dimethylsiloxane diol and methyltriacetoxysilane and sufficient pentane to give a 1 percent solution. In Example 52, 25 parts of methyltriacetoxysilane was used per 100 parts of dimethylsiloxane diol. In Example 53, 10 parts of methyltriacetoxysilane were used per 100 parts of dimethylsiloxane diol. A porous polysulfone substrate membrane, as described herein, was coated with this formulation and, after the coating had cured, was exposed to a hexane/toluene mixture for 16 hours. The permeation tests described above were made on the multicomponent membrane before and after exposure to the hexane/toluene mixture. Results are shown in Table VIII.

TABLE VIII

| | Before Exposure | | After Exposure | |
|---|---|---|---|---|
| Example | $(P/l)H_2 \times 10^6$ | $\alpha\frac{H_2}{CO}$ | $(P/l)H_2 \times 10^6$ | $\alpha\frac{H_2}{CO}$ |
| 52 | 106 | 47 | 97 | 40 |
| 53 | 88 | 46 | 76 | 37 |

P.S. Parts and percentages are by weight throughout the description.

**Claims**

1. A multicomponent membrane for gas separations, comprising

a. a polymeric porous substrate membrane, and

b. a coating in contact with said membrane, characterised in that the coating is a condensation product of 100 parts by weight of silanol terminated poly(dimethylsiloxane) and 1 to 20 parts by weight of a cross-linking compound having the formula

$$R_1M\ Si\ (OR_2)_3$$

where $R_1$ is

$-CH_3$, $-SH$, $-Cl$, $-CF_3$, $-NCO$

$-CN$, 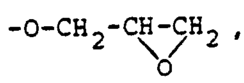, 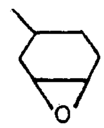, $-NH_2$, $-NHCH_3$,

$-N(CH_3)_2$, 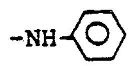, $-NHCOOCH_2CH_3$, 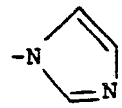

or $—N(CH_2CH_2OH)_2$, M is $—CH_2—$, $—CH_2CH_2—$ or $—CH_2CH_2CH_2—$, and $R_2$ is $—CH_3$, $—CH_2CH_3$, or

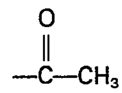

2. A multicomponent membrane of Claim 1, wherein the substrate membrane is in the form of a hollow fiber.

3. A multicomponent membrane of Claim 2, wherein the hollow fiber is an anisotropic polysulfone fiber.

4. A multicomponent membrane of any of the preceding claims, wherein the coating has a thickness of $5\times10^{-7}$m to $5\times10^{-5}$m 5000 Angstrom to 50 micron.

5. A multicomponent membrane of any of the preceding claims, wherein the cross-linking compound is selected from aminopropyltrimethoxysilane, aminopropyltriethoxysilane, chloropropyltriethoxysilane, chloropropyltrimethoxysilane, mercaptopropyltriethoxysilane, mercaptopropyltrimethoxysilane, isocyanotopropyltriethoxysilane and N-phenylaminopropyltrimethoxysilane.

6. A multicomponent membrane of any of the preceding claims, wherein the poly(dimethylsiloxane) is dimethylsiloxane diol having a molecular weight within the range of 10,000 to 200,000.

7. A multicomponent membrane of any of the preceding claims, wherein the coating is made up of 2 to 12 parts by weight of said cross-linking compound per 100 parts by weight of dimethylsiloxane diol.

8. A multicomponent membrane according to all preceding claims taken in combination.

9. A multicomponent membrane of Claim 8, wherein the substrate membrane has a wall thickness of $5\times10^{-5}$m to $3\times10^{-4}$m 50 to 300 micron and an average pore cross-sectional diameter within the range of $5\times10^{-10}$m to $2\times10^{-6}$m 5 to 20,000 Angstrom.

10. A multicomponent membrane of Claim 8, wherein the cross-linking compound is aminopropyltriethoxysilane.

11. A multicomponent membrane of Claim 8, wherein the cross-linking compound is aminopropyltrimethoxysilane.

12. A multicomponent membrane of Claim 8, wherein the cross-linking compound is chloropropyltriethoxysilane.

13. A multicomponent membrane of Claim 8, wherein the cross-linking compound is chloropropyltrimethoxysilane.

14. A multicomponent membrane of Claim 8, wherein the cross-linking compound is mercaptopropyltriethoxysilane.

15. A multicomponent membrane of Claim 8, wherein the cross-linking compound is mercaptopropyltrimethoxysilane.

16. A multicomponent membrane of Claim 8, wherein the cross-linking compound is isocyanotopropyltriethoxysilane.

17. A multicomponent membrane of Claim 8, wherein the cross-linking compound is N-phenylaminopropyltrimethoxysilane.

18. A process of separating a gas from a mixture of gases by selective permeation through a multicomponent membrane according to any of the preceding claims.

## Patentansprüche

1. Mehrkomponentenmembran für Gastrennungen mit
a. einer polymeren, porösen Substratmembran und
b. einem damit in Kontakt stehenden Überzug, dadurch gekennzeichnet, daß der Überzug ein Kondensationsprodukt aus 100 Gew.-Teilen eines Silanolendgruppen aufweisenden Poly(dimethylsiloxans) und 1 bis 20 Gew.-Teilen einer vernetzenden Verbindung der Formel

$$R_1M\ Si\ (OR_2)_3$$

in der $R_1$ eine Gruppe der Formeln

$-CH_3$, $-SH$, $-Cl$, $-CF_3$, $-NCO$

$-CN$, 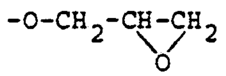, 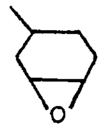, $-NH_2$, $-NHCH_3$,

$-N(CH_3)_2$, 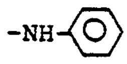, $-NHCOOCH_2CH_3$, 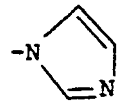

oder $-N(CH_2CH_2OH)_2$,

M eine Gruppe der Formeln $—CH_2—$, $—CH_2CH_2—$ oder $—CH_2CH_2CH_2—$ und $R_2$ eine Gruppe der Formeln $—CH_3$, $—CH_2CH_3$ oder

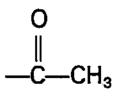

bedeuten, ist.

2. Mehrkomponentenmembran nach Anspruch 1, dadurch gekennzeichnet, daß die Substratmembran in Form einer Hohlfaser vorliegt.

3. Mehrkomponentenmembran nach Anspruch 2, dadurch gekennzeichnet, daß die Hohlfaser eine anisotrope Polysulfonfaser ist.

4. Mehrkomponentenmembran nach einem der vorhergehenden Ansprüche, dadurch gekennzeichnet, daß der Überzug eine Dicke von $5\times10^{-7}$m bis $5\times10^{-5}$m (5000 Ångström bis 50 µm) aufweist.

5. Mehrkomponentenmembran nach einem der vorhergehenden Ansprüche, dadurch gekennzeichnet, daß die vernetzende Verbindung aus der Aminopropyltrimethoxysilan, Aminopropyltriethoxysilan, Chlorpropyltriethoxysilan, Chlorpropyltrimethoxysilan, Mercaptopropyltriethoxysilan, Mercaptopropyltrimethoxysilan, Isocyanatopropyltriethoxysilan und N-Phenylaminopropyltrimethoxysilan umfassenden Gruppe ausgewählt ist.

6. Mehrkomponentenmembran nach einem der vorhergehenden Ansprüche, dadurch gekennzeichnet, daß das Poly(dimethylsiloxan) Dimethylsiloxandiol mit einem Molekulargewicht im Bereich von 10000 bis 200000 ist.

7. Mehrkomponentenmembran nach einem der vorhergehenden Ansprüche, dadurch gekennzeichnet, daß der Überzug aus 2 bis 12 Gew.-Teilen der vernetzenden Verbindung pro 100 Gew.-Teile Dimethylsiloxandiol besteht.

8. Mehrkomponentenmembran nach sämtlichen vorhergehenden Ansprüchen in Kombination.

9. Mehrkomponentenmembran nach Anspruch 8, dadurch gekennzeichnet, daß die Substratmembran eine Wandstärke von $5\times10^{-5}$m bis $3\times10^{-4}$m (50 bis 300 µm) und einen durchschnittlichen Porendurchmesser im Bereich von $5\times10^{-10}$m bis $2\times10^{-6}$m (5 bis 20000 Ångström) aufweist.

10. Mehrkomponentenmembran nach Anspruch 8, dadurch gekennzeichnet, daß die vernetzende Verbindung Aminopropyltriethoxysilan ist.

11. Mehrkomponentenmembran nach Anspruch 8, dadurch gekennzeichnet, daß die vernetzende Verbindung Aminopropyltrimethoxysilan ist.

12. Mehrkomponentenmembran nach Anspruch 8, dadurch gekennzeichnet, daß die vernetzende Verbindung Chlorpropyltriethoxysilan ist.

13. Mehrkomponentenmembran nach Anspruch 8, dadurch gekennzeichnet, daß die vernetzende Verbindung Chlorpropyltrimethoxysilan ist.

14. Mehrkomponentenmembran nach Anspruch 8, dadurch gekennzeichnet, daß die vernetzende Verbindung Mercaptopropyltriethoxysilan ist.

15. Mehrkomponentenmembran nach Anspruch 8, dadurch gekennzeichnet, daß die vernetzende Verbindung Mercaptopropyltrimethoxysilan ist.

16. Mehrkomponentenmembran nach Anspruch 8, dadurch gekennzeichnet, daß die vernetzende Verbindung Isocyanatopropyltriethoxysilan ist.

17. Mehrkomponentenmembran nach Anspruch 8, dadurch gekennzeichnet, daß die vernetzende Verbindung N-Phenylaminopropyltrimethoxysilan ist.

18. Verfahren zur Abtrennung eines Gases aus einer Gasmischung durch selektive Permeation durch eine Mehrkomponentenmembran nach einem der vorhergehenden Ansprüche.

**Revendications**

1. Membrane à composants multiples pour les séparations de gaz comprenant:
a. une membrane de substrat poreuse en polymère, et
b. un revêtement en contact avec la membrane, caractérisée en ce que le revêtement est un produit de condensation de 100 parties en poids de poly(diméthylsiloxane) à terminaison silanol et de 1 à 20 parties en poids d'un composé de réticulation répondant à la formule:

$$R_1M\ Si\ (OR_2)3$$

dans laquelle $R_1$ est

$-CH_3$, $-SH$, $-Cl$, $-CF_3$, $-NCO$

$-CN$, 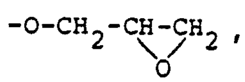 , 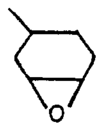 , $-NH_2$, $-NHCH_3$,

$-N(CH_3)_2$, 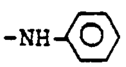 , $-NHCOOCH_2CH_3$, 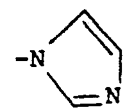 .

ou $-N(CH_2CH_2OH)_2$, M est $-CH_2-$, $-CH_2CH_2-$ ou $-CH_2CH_2CH_2-$ et $R_2$ est $-CH_3$, $-CH_2CH_3$, ou

$$-\overset{O}{\overset{\|}{C}}-CH_3.$$

2. Membrane à composants multiples selon la revendication 1 dans laquelle la membrane de substrat a la forme d'une fibre creuse.
3. Membrane à composants multiples selon la recendication 2, dans laquelle la fibre creuse est une fibre de polysulfone anisotrope.
4. Membrane à composants multiples selon l'une quelconque des revendications précédentes, dans laquelle le revêtement a une épaisseur de $5\times10^{-7}$m à $5\times10^{-5}$m.
5. Membrane à composants multiples selon l'une quelconque des revendications précédentes, dans laquelle le composé de réticulation est choisi parmi l'aminopropyltriméthoxysilane, l'aminopropyltriéthoxysilane, le chloropropyltriéthoxysilane, le chloropropyltriméthoxysilane, le mercaptopropyltriéthoxysilane, le mercaptopropyltriméthoxysilane, l'isocyanatopropyltriéthoxysilane et le N-phénylaminopropyltriméthoxysilane.
6. Membrane à composants multiples selon l'une quelconque des revendications précédentes, dans laquelle le poly(diméthylsiloxane) est le diméthylsiloxanediol ayant un poids moléculaire compris entre 10000 et 200000.
7. Membrane à composants multiples selon l'une quelconque des revendications précédentes, dans laquelle le revêtement est constitué de 2 à 12 parties en poids du composé de réticulation pour 100 parties en poids de diméthylsiloxanediol.
8. Membrane à composants multiples selon les revendications précédentes prises en combinaison.
9. Membrane à composants multiples selon la revendication 8, dans laquelle la membrane de substrat a une épaisseur de paroi de $5\times10^{-5}$m à $3\times10^{-4}$m et un diamètre en couple moyen des pores compris entre $5\times10^{-10}$m et $2\times10^{-6}$m.
10. Membrane à composants multiples selon la revendication 8 dans laquelle le composé de réticulation est l'aminopropyltriéthoxysilane.
11. Membrane à composants multiples selon la revendication 8 dans laquelle le composé de réticulation est l'aminopropyltriéthoxysilane.
12. Membrane à composants multiples selon la revendication 8 dans laquelle le composé de réticulation est le chloropropyltriéthoxysilane.
13. Membrane à composants multiples selon la revendication 8 dans laquelle le composé de réticulation est le chloropropyltriméthoxysilane.
14. Membrane à composants multiples selon la revendication 8 dans laquelle le composé de réticulation est le mercaptopropyltriéthoxysilane.
15. Membrane à composants multiples selon la revendication 8 dans laquelle le composé de réticulation est le mercaptopropyltriméthoxysilane.

16. Membrane à composants multiples selon la revendication 8 dans laquelle le composé de réticulation est l'isocyanotopropyltriéthoxysilane.

17. Membrane à composants multiples selon la revendication 8 dans laquelle le composé de réticulation est le N-phénylaminopropyltriméthoxysilane.

18. Procédé de séparation d'un gaz dans un mélange de gaz par perméation sélective à travers une membrane à composants multiples selon l'une quelconque des revendications précédentes.